# EUROPEAN PATENT APPLICATION

(11) **EP 3 647 227 A1**
(43) Date of publication of application: **06.05.2020**
(21) Application number: 18823226.8
(22) Date of filing: 22.06.2018
(51) Int. Cl.: B65D 85/808, A23F 5/10, B65B 29/02, B65B 63/02, B65B 31/02

(54) **COFFEE BEAN COMPRESSION BLOCK, AND MANUFACTURING METHOD AND MANUFACTURING DEVICE OF TEA BAG, USING SAME**

(30) Priority: 26.06.2017 KR 20170080422; 28.07.2017 KR 20170096506; 17.04.2018 KR 20180044692
(71) Applicant: Jung, Hyoen Tack, Yongin-si, Gyeonggi-do 17086 (KR); Lee, Bum Ho, Yongin-si, Gyeonggi-do 17084 (KR)
(72) Inventor: LEE, Byeong Ho, Seoul 07546 (KR); JEONG, Yeong Ran, Sejong 30100 (KR); JUNG, Hyoen Tack, Yongin-si Gyeonggi-do 17086 (KR); LEE, Bum Ho, Yongin-si Gyeonggi-do 17084 (KR)
(74) Representative: reuteler & cie SA
(86) International application number: PCT/KR2018/007049
(87) International publication number: WO 2019/004658

(57) **Abstract**

The present disclosure provides various kinds of coffee drinks such as espresso using compressed coffee bean blocks or coffee particles finely separated in a compressing process, thus allowing people to enjoy unique deep and rich flavor of the roasted coffee bean, and vacuum packs a coffee bean tea-bag by a vacuum wrapper, thus maintaining the flavor of the roasted coffee bean for a lengthy period of time, and utilizing compressed coffee as an air freshener.

## Description

### BACKGROUND OF THE INVENTION

### Field of the invention

The present disclosure relates to a method and an apparatus for manufacturing a compressed coffee bean block containing coffee particle which is a result of a compressing process and a tea-bag using the same and, more particularly, to a method and an apparatus for manufacturing a compressed coffee bean block and a tea-bag using the same, which are intended to prepare coffee drinks that allow people to enjoy unique deep and rich flavor of roasted coffee beans by directly compressing the roasted coffee beans using a compressor to form a compressed block without a grinding process using a grinder, extracting espresso, dripping or brewing coffee with water using the coffee particles that are finely separated in the compressing process and constitute the compressed block so as to eliminate the causes of decreasing the flavor, for example, carbonization and burnt taste that are caused by forcible destruction of fiber constituting a cell membrane or heat in the process of grinding the roast coffee beans using the grinder.

Furthermore, the present disclosure relates to a tea-bag, a method for manufacturing the tea-bag, and a coffee drink using the tea-bag, in which roasted coffee beans compressed to form a block or coffee particles separated into fine particles in a compressing process are packed with a permeable wrapper and are brewed in water when a person wants to drink coffee.

The present disclosure relates to a tea-bag and a manufacturing method thereof, in which a compressed coffee bean block formed by compressing roasted coffee beans or coffee particles separated into fine particles in a compressing process are packed with a permeable wrapper to make a primary compressed coffee bean block tea-bag and then the tea-bag is vacuum packed with a vacuum wrapper to make a secondary tea-bag, thus allowing coffee to be stored for a lengthy period of time.

The present disclosure relates to an air freshener using the compressed coffee bean block.

### Related Art

Several factors that determine the flavor of coffee enjoyed by more than one third of the world's population include the species of coffee beans, a roasting level, the aging time of roasted coffee beans, a bean grinding method, the particle size of ground coffee, a coffee dripping method, a ratio of infused coffee to water, the kind and temperature of water, and various kinds of additives added to coffee. Various flavors of coffee may be selected according to the personal preference.

Generally, a coffee preparing process includes a green-bean selecting step, a green-bean processing step, a green-bean roasting step, a bean grinding step, and a coffee dripping step.

It is very difficult to harvest green beans. The green beans are classified into Arabica which is mainly used for espresso or hand drip coffee, and Robusta which is used as a raw material of instant coffee rather than drip coffee. In Korea, Robusta accounts for 90% and Arabica accounts for 10%.

Even the same species of green bean shows a great difference in flavor, aroma and acidity depending on a producing region. Coffee may be classified into Ethiopia, Columbia, Kenya AA, and Blue mountain, depending on the country of origin.

Depending on the level of roasting that is a first step of the coffee preparing process, coffee is classified into light roast, cinnamon roast, medium roast, high roast, city roast, full city roast, French roast, Italian roast and the like.

The light roast is coffee that is roasted to the lightest level, while the Italian roast is coffee that is roasted to the longest level until it becomes dark.

The lighter roast has more acidity and less aroma, while the longer and darker roast has a stronger taste.

Coffee dripping uses a method of grinding and dripping the roasted beans.

Furthermore, coffee having flavor increased by aging the roasted coffee beans has been widely used. It usually takes seven days to age the coffee beans.

The kinds of coffee we drink are classified into espresso that is highly concentrated coffee, Caffe Americano (original name: long black) made by diluting espresso with water, Caffe latte (or Cafe au Lait) made by adding milk to Caffe Americano, and Caffe mocha made by adding chocolate to Caffe latte.

Further, examples of the Caffe mocha include pure Caffe latte made by adding only chocolate to Caffe latte, white Caffe mocha made by adding white chocolate to Caffe latte, and caramel Caffe mocha made by adding chocolate and caramel to Caffe latte.

In addition, coffee includes cappuccino that is prepared by adding milk to strong espresso and generating steam to make froth, macchiato that is similar to the cappuccino but contains less milk and froth to provide a strong coffee taste while being softer than espresso, con panna that is prepared by putting whipping cream on espresso, etc.

The way we make and drink coffee in our daily life is to extract coffee by an espresso extraction method or to drip coffee using a dripper. In addition, instant coffee which is dissolved in hot water is widely used.

The instant coffee may coffee that contains only coffee powders, or mixed coffee that is prepared by mixing coffee powders with cream powders and sugar powders.

Such an instant coffee may be stored in a bottle and be spooned up and dissolved in water when a person wants to drink coffee, or may be packed and stored in a stick-type wrapper and be dissolved in water after the wrapper is torn off when a person wants to drink coffee.

However, the methods are problematic in that the coffee bean powder made by grinding the roasted coffee bean is extracted in the espresso extraction method or is dripped using the dripper or powder made by grinding the coffee bean is mixed with water when a person wants to drink coffee, so that the unique flavor of the roasted coffee bean may be lost in the process of grinding the roasted coffee bean and consequently there is a limit to provide the deep and rich flavor of the coffee.

As the related art, Korean Patent No. 10-0929274 (Nov. 23, 2009) entitled "Method for Manufacturing Coffee Tea-bag" (hereinafter, referred to as 'related art 1') discloses a technology wherein roasted and ground coffee is packed in an infusion wrapper, the coffee packed in the infusion wrapper is vacuum packed with a vacuum wrapper, and the vacuum-packed coffee is packed with a wrapper on which information such as a product name, a picture or a company is printed to make a coffee tea-bag. The coffee tea-bag minimizes rancidity due to the vacuum packing, so that the wrapper of the coffee tea-bag and the vacuum wrapper are torn off and the tea-bag is put into and brewed with hot water when a person wants to drink coffee, thus allowing the person to enjoy the flavor and the aroma of freshly roasted brewed coffee.

As the related art, US Patent Application No. 1993-731,887 (June 22, 1934) entitled "Compressed Coffee Tablet and Method of Preparing Same" (hereinafter, referred to as 'related art 2') discloses a technology wherein the roasted coffee bean is ground to be formed into a predetermined shape or a predetermined additive is mixed with the ground coffee powder to have the shape of a tablet, thus allowing it to be brewed in water when a person wants to drink coffee.

However, the related art 1 is configured such that the roasted coffee bean is ground to make the brewed coffee powder and then it is packed in the infusion wrapper to allow it to be brewed in water when a person wants to drink coffee, and the related art 2 is configured such that the roasted coffee bean is ground to make the brewed coffee powder and then the brewed coffee powder is formed into a predetermined shape to allow it to be brewed in water when a person wants to drink coffee. They do not solve the problem found in the related art wherein the intrinsic flavor of the roasted coffee bean is deteriorated in the grinding process because the coffee bean is finely ground to the size of 0.2mm to 1mm in the roasting and grinding process.

Therefore, the development of technology is required to maintain the intrinsic flavor of the roasted coffee bean to the maximum until a person drinks coffee.

The inventor(s) of the present invention has found through long research and experiment that all kinds of coffee do not completely provide the deep and rich flavor of the roasted coffee bean, because of the grinding of the roasted coffee bean.

That is, in the process of grinding the roasted coffee bean, fiber constituting a cell membrane of a coffee bean is forcibly destroyed, so that an impure taste such as burnt taste of coffee contained in the fiber is generated to consequently lead to the impure taste of coffee, the unique flavor of the coffee bean is reduced, and the fat ingredients of the coffee is burnt by frictional heat between a grinding blade and the coffee bean during grinding, thus leading to burnt taste due to carbonization.

Particularly, when the espresso is extracted, the carbonization is more remarkably generated by the blade frictional heat in the process of grinding the finely ground coffee particle to about 0.2mm.

In this experiment process, it is found that, when a compressed coffee bean block made by compressive forming the roasted coffee bean without forcibly grinding it or coffee particle separated finely in the compressing process are used to extract coffee in the espresso extraction method, drip or brew coffee in water, the unique flavor of the roasted coffee bean can be maximally guaranteed.

The reason is as follows: if the roasted coffee bean is compressed without any process, cracks occur along the cell membrane of a honeycomb structure constituting the bean in the process of compressing the coffee bean to finely separate it into small coffee particles, so that the forcible destruction of the fiber constituting the cell membrane of the coffee bean is reduced, and thereby various impure tastes of coffee included in the fiber are not generated, thus reducing the impure taste such as the burnt taste of coffee, and the frictional heat between the grinding blade and the coffee bean generated during the grinding is eliminated, so that the burnt taste of the coffee fat is minimized, and coffee oil ingredients making aroma deep ooze out and flavor is retained, so that a rich coffee body is achieved and the unique flavor of the coffee is retained.

Furthermore, the compressed coffee bean block made by compressing the coffee bean is separated into the fine coffee particles in the compressing process, so that the block is brewed well in water, and gas contained in the bean is discharged in the compressing process to shorten an aging period.

Therefore, the present inventor(s) has completed the present invention on the basis of the above-mentioned result.

### SUMMARY OF THE INVENTION

The present disclosure provides a compressed coffee bean block, a method and an apparatus for manufacturing the compressed coffee bean block, and a coffee drink using the compressed coffee bean block, which are intended to prepare coffee drinks that allow people to enjoy unique deep and rich flavor of roasted coffee beans by directly compressing the roasted coffee beans using a compressor to form a compressed block without a grinding process using a grinder, extracting espresso, dripping or brewing coffee with water using the coffee particles that are finely separated along a cell membrane of a honeycomb structure constituting the bean in the compressing process, minimize the forcible destruction of the fiber constituting the cell membrane, and constitute the compressed block so as to eliminate carbonization and the reason of decreasing the flavor, for example, burnt taste caused by grinding or heat in the process of grinding the roast coffee beans using the grinder.

The present disclosure provides a tea-bag, a method for manufacturing the tea-bag, and a coffee drink using the tea-bag, in which roasted coffee beans compressed to form a block or coffee particles separated into fine particles in a compressing process are packed with a permeable wrapper and are brewed in water when a person wants to drink coffee.

The present disclosure provides a tea-bag and a manufacturing method thereof, in which a compressed coffee bean block formed by compressing roasted coffee beans or coffee particles separated into fine particles in a compressing process are packed with a permeable wrapper to make a primary compressed coffee bean block tea-bag and then the tea-bag is vacuum packed with a vacuum wrapper to make a secondary tea-bag, thus allowing coffee to be stored for a lengthy period of time.

The present disclosure provides an air freshener using the compressed coffee bean block.

In an aspect, the present disclosure provides a compressed coffee bean block formed by compressing a roasted coffee bean or coffee particles separated into fine particles constituting the compressed block in a compressing process.

In the compressing process, the size of the finely separated coffee particle may have the diameter of 0.2mm or less according to a compressive force or a roasting level.

The roasted coffee bean is preferably aged prior to being compressed.

When compressing the coffee bean, an additive may be mixed with the roasted coffee bean and then a mixture may be formed by compression.

The compressed coffee bean block is preferably compressed such that V1/ V0 = 0.1 to 0.5, assuming that a total volume including a void of the roasted coffee bean is V0 and a volume of the compressed coffee bean block is V1.

If the compressive force is large and thus the volume of the compressed block is reduced too much, fat ingredients may escape to cause rancidity and much coffee aroma may be lost. On the other hand, if the compressive force is small and thus the volume of the compressed block is inappropriately increased, the size of the finely separated coffee particle is too large to extract espresso or the like or the extraction time of a coffee drink becomes longer. The extraction of various good ingredients of coffee is also small, so that the flavor of the coffee is undesirably reduced.

In consideration of these elements, a volume ratio may be properly adjusted within a range of V1/V0 = 0.1 to 0.5 according to a roasting level, thus adjusting the flavor of coffee that is to be enjoyed.

For example, the pressure of a compressor up to 800kg/cm² is applied to compressive form 10g of roasted coffee bean that is a dose of coffee and then to make the compressed coffee bean block having the diameter of 40mm. Consequently, the ratio of V1/V0 is about 0.25.

V1/V0 of the much roasted coffee bean is about 0.22 under the same condition.

Under the same condition, the compression pressure as well as the compression time may be changed to adjust the flavor.

Furthermore, in order to separate the coffee bean into fine coffee particles at a uniform level in the compressing process, angled protrusions of predetermined patterns are disposed on a compressive forming rod and a bottom of a mold coming into contact with the coffee bean, so that the coffee beans are effectively compressed in many directions in the compressing process and multiple cracks are formed to make fine coffee particles.

In order to make the compressed coffee bean block large and use it as an air freshener, 1700kg/cm² of pressure may be applied to about 30g of coffee bean.

In this case, it is natural that the volume ratio should be changed with a change in compressive forming pressure.

Furthermore, the present disclosure provides a coffee tea-bag by packing the compressed coffee bean block or the coffee particles separated into the fine particles in the compressing process with a permeable tea-bag wrapper.

Furthermore, the present disclosure provides a tea-bag composed of a primary tea-bag, and a secondary tea-bag including a vacuum wrapper packing the primary tea-bag.

Furthermore, the present disclosure provides a method for manufacturing a bag-shaped primary tea-bag, by inserting a compressed coffee bean block formed by compressing a roasted coffee bean or coffee particles into a permeable wrapper, and seaming an edge of the permeable wrapper.

Furthermore, the present disclosure provides a method for manufacturing a secondary tea-bag, by inserting the primary tea-bag into a vacuum wrapper, and seaming an edge of the vacuum wrapper by thermal bonding while discharging air from between the primary tea-bag and the vacuum wrapper.

Furthermore, the present disclosure provides various kinds of coffee drinks obtained by each extraction method, which contain coffee essence extracted from the compressed coffee bean block or the coffee particles generated in the compressing process.

The coffee drink may be a mixture of the coffee essence with an additive.

The coffee may be prepared while being contained in a container.

Furthermore, the present disclosure provides an air freshener using the compressed coffee bean block and the tea-bag.

### BRIEF DESCRIPTION OF THE DRAWINGS

FIGS. 1 and 2 illustrate a preferred embodiment of a compressed coffee bean block according to the present disclosure, in which FIG. 1 is a perspective view of the compressed coffee bean block, and FIG. 2 is a photograph of the compressed coffee bean block.
FIG. 3 is a partially cutaway perspective view illustrating a first embodiment of an apparatus for manufacturing the compressed coffee bean block.
FIGS. 4A to 4C are sectional views illustrating a first embodiment of a method for manufacturing the compressed coffee bean block.
FIG. 5 is a perspective view illustrating a second embodiment of a compressed coffee bean block.
FIG. 6 is a partially cutaway perspective view illustrating a second embodiment of an apparatus for manufacturing the compressed coffee bean block.
FIGS. 7A to 7C are sectional views illustrating a second embodiment of a method for manufacturing the compressed coffee bean block.
FIGS. 8 and 9 illustrate a first preferred embodiment of a tea-bag according to the present disclosure.

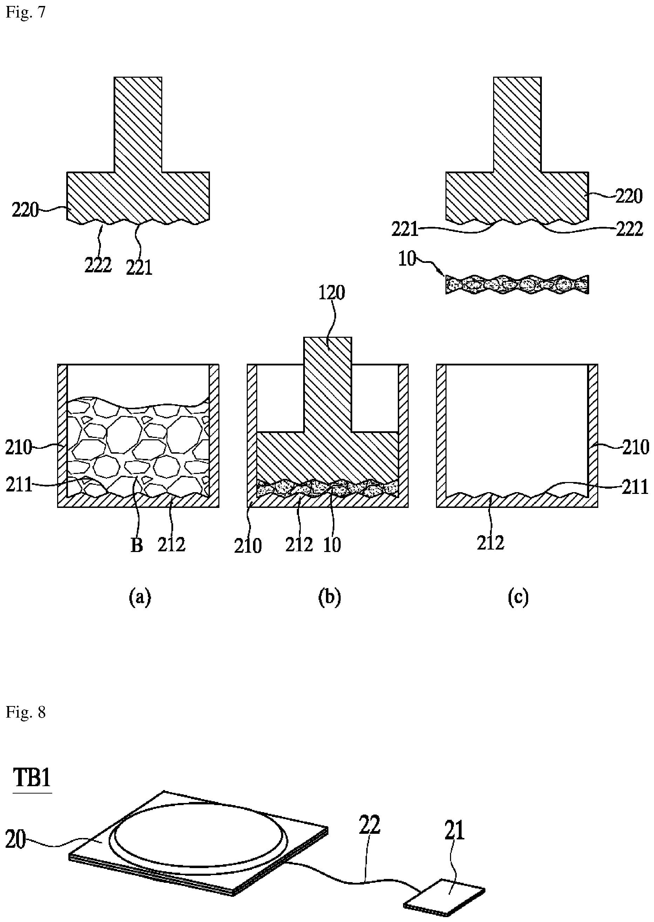

FIG. 8 is a perspective view of the tea-bag.

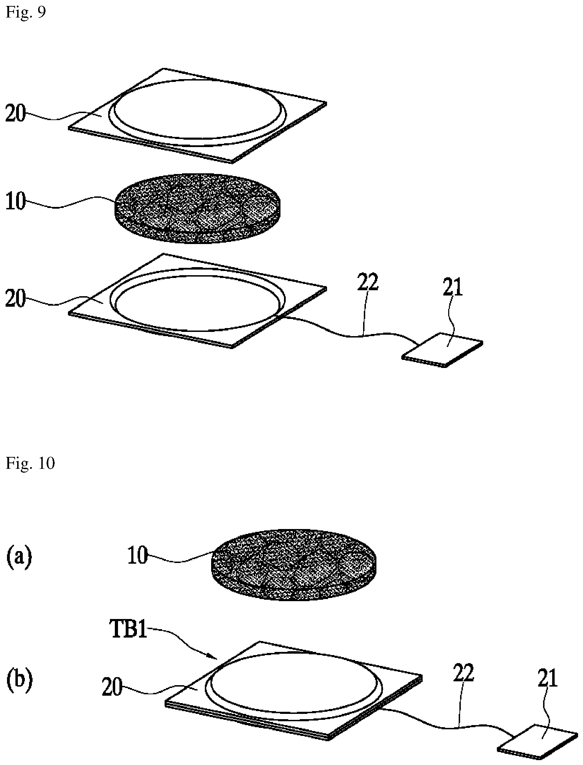

FIG. 9 is an exploded perspective view of the tea-bag.
FIGS. 10(a) and 10(b) are process diagrams illustrating a first preferred embodiment of a method for manufacturing the tea-bag according to the present disclosure.

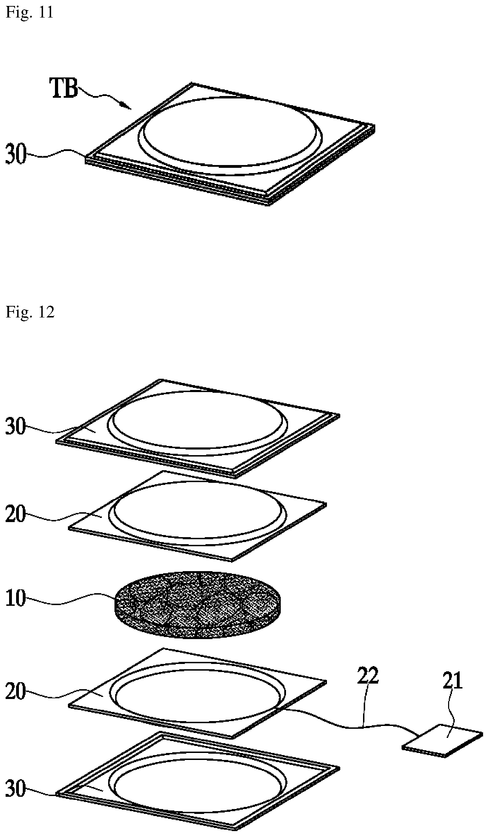

FIGS. 11 and 12 illustrate a second preferred embodiment of a tea-bag according to the present disclosure, in which FIG. 11 is a perspective view of the tea-bag, and FIG. 12 is an exploded perspective view of the tea-bag.

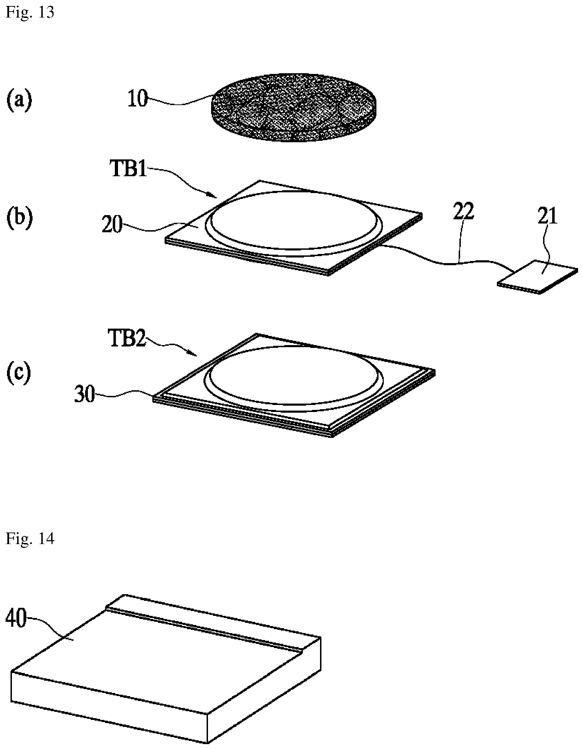

FIGS. 13(a) to 13(c) are process diagrams illustrating a second preferred embodiment of a method for manufacturing the tea-bag according to the present disclosure.
FIG. 14 is a perspective view illustrating a state where the compressed coffee bean block, a primary tea-bag, and a secondary tea-bag are packed with an outer wrapper.

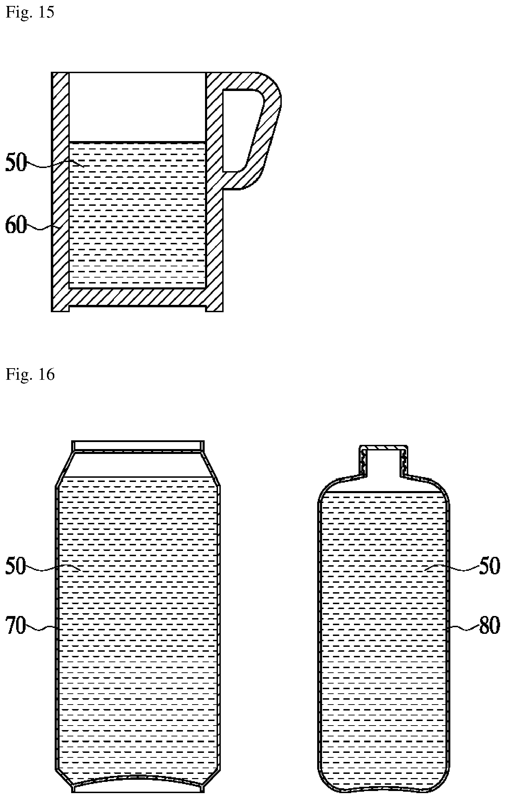

FIGS. 15 and 16 illustrate a preferred embodiment of a coffee drink using the compressed coffee bean block according to the present disclosure, in which FIG. 15 is a sectional view illustrating the coffee drink using the compressed coffee bean block, and
FIG. 16 is a sectional view illustrating the coffee drink contained in a container.

### DESCRIPTION OF EXEMPLARY EMBODIMENTS

Hereinafter, a method and an apparatus for manufacturing a compressed coffee bean block and a tea-bag using the same according to preferred embodiments of the present disclosure will be described with reference to the accompanying drawings.

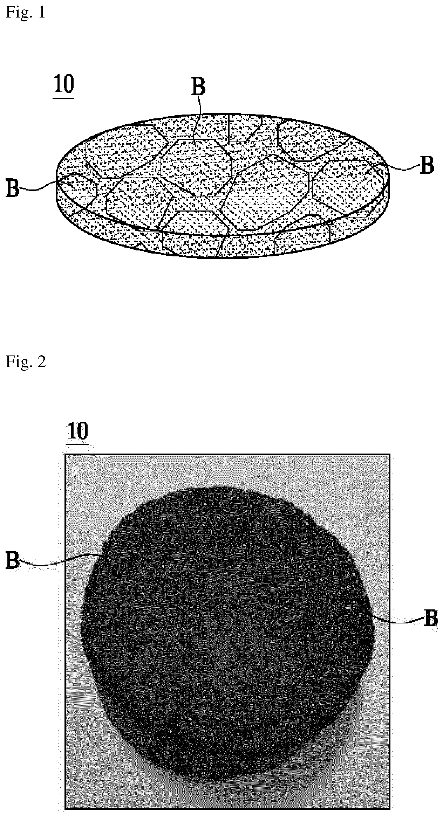

FIGS. 1 and 2 illustrate a preferred embodiment of a compressed coffee bean block according to the present disclosure.

The compressed coffee bean block 10 according to this embodiment is formed by compressing roasted coffee beans B.

The compressed coffee bean block 10 may be manufactured by putting the roasted coffee beans B into a mold and compressing them with a push rod that is operated by a hydraulic press or a mechanical press, or may be compressive formed by a screw- or gear-type extrusion apparatus.

The compressed coffee bean block 10 formed as such is not uniform but has cracks as the coffee beans B are compressed. The compressed coffee bean block is separated into fine particles and is compressive formed into a shape according to the mold.

As illustrated in FIG. 2, the compressed coffee bean block 10 that has been compressive formed is shaped by separating the coffee beans into the fine coffee particles and then agglomerating particles.

Assuming that the volume of the coffee beans is V0 and the volume of the compressed coffee bean block 10 is VI, it is preferable to set a compression ratio in compressive forming, V1 / V0 = 0.1 to 0.5.

According to an experiment, when the compression ratio is 0.5 or more, the formability may be deteriorated and the coffee beans may be separated into large particles, so that solubility in water may become poor. Meanwhile, if the compression ratio is 0.1 or less, pressure should be correspondingly increased, so that a large amount of fat ingredients may be undesirably extracted.

When compressive forming 10g coffee beans, it is preferable that pressure is equal to or more than 400kg/cm² and is less than 800kg/cm².

According to the experiment, when the compressive forming pressure of the coffee beans is less than 400kg/cm², coffee particles constituting the compressed coffee bean block 10 remain large in size, so that the coffee particles are difficult to dissolve in water. If the pressure is 800kg/cm² or more, the fat ingredients may be extracted and the rancidity of the coffee beans may easily occur in the process for compressive forming the coffee beans.

The coffee flavors may be variously changed depending on the species of the green bean, the bean roasting level, the particle size of the ground bean, water temperature, an extraction method, an extraction time, etc.

The grinding level of the coffee particles is appropriately changed depending on the roasting level and the extraction method of the coffee particles. For example, in the case of extracting espresso, the coffee particles should be finely ground to about 0.2mm. In the case of a brewing-type coffee preparing method using water, the coffee particles are ground to about 0.7mm that is a medium grinding level, so as to prevent the impure taste of coffee from being over-extracted.

In the case of beans that are less expanded and remain dense in the roasting process due to a light roasting level, coffee particles should be relatively finely ground to adequately produce the unique taste of the coffee such as a sour taste. In a finely grinding process, due to the carbonization and the destruction of fiber constituting a cell membrane of a honeycomb structure constituting the bean, the light roasted bean makes it difficult to feel the unique flavor of brewed coffee when espresso is extracted or brewed.

In this case, if the pressure is increased to maintain V1/V0 = 0.15 to 0.25, there is no carbonization and there is little forcible destruction of fiber while the coffee particles are separated to 0.2mm or less in the compressing process, so that it is suitable for making the intrinsic flavor of the coffee.

Thus, the size of the coffee particles should be properly adjusted according to the coffee roasting level, the extraction method and the like. In the case of strongly roasted coffee bean, a bitter taste is strong and a crumbling degree is large, so that it is proper to reduce the pressure and thereby relatively increase the ratio of V1/V0. Especially when making the coffee drink by brewing the coffee particles in water, it is possible to feel the unique flavor of the coffee by making a brewing time relatively long even if the ratio of V1/V0 increases up to 0.5.

In order to use the coffee particles as a coffee air freshener, when the amount of the coffee beans is 30g, the pressure is applied up to 1600kg/cm².

Meanwhile, it is preferable to age the coffee beans B prior to compressive forming.

If the coffee beans are aged, the amount of gas contained in the coffee beans may be reduced, thus making the flavor of the brewed coffee softer and deeper.

Such a compressed coffee bean block 10 may be extracted into espresso or put into a dripper to be dripped, thus allowing people to enjoy Caffe Americano, Caffe latte, Caffe mocha and the like.

Espresso may be extracted by putting the coffee particles into the dripper for espresso and then dripping. Then, people may enjoy Caffe Americano made by diluting espresso with water, Caffe latte made by adding milk to Caffe Americano, Caffe mocha made by adding chocolate to Caffe latte, and the like.

Furthermore, the compressed coffee bean block 10 may be brewed in water to prepare coffee such as Caffe Americano.

The compressed coffee bean block 10 according to this embodiment is configured such that much fiber constituting the cell membrane of the coffee bean B is not destroyed, like when exiting grinding by a blade in the process of compressive forming of the coffee bean B, and relatively many cracks are formed along a honeycomb-shaped cell membrane constituting the bean, and the coffee bean is separated into fine coffee particles in this process, so that the impure taste of coffee caused by the destruction of the fiber due to the contact of fiber with a grinding blade is not generated when coffee is prepared by dripping or brewing the compressed coffee bean block 10 or the coffee particles in water, thus minimizing the impure taste of coffee such as burnt taste, and no frictional heat is applied to the coffee bean B by the grinding blade, thus minimizing burnt taste due to the carbonization, and allowing people to enjoy the intrinsic flavor of coffee while the unique flavor of the roasted coffee bean B remains intact by compression.

Furthermore, the compressed coffee bean block 10 according to this embodiment leads to cracks while the coffee bean B is compressed. Thus, since the coffee particles are finely separated, a contact area of the particles of the coffee bean B with water is increased when coffee is dripped or brewed in water. Consequently, it is confirmed that the efficient dripping is realized and coffee is well brewed in water.

Furthermore, in the compressive forming process, gas contained in the coffee bean is discharged, so that it may sufficiently give the flavor even if the aging time is short.

The compressed coffee bean block 10 may be made for Caffe Americano by putting the roasted coffee bean into the mold, and then compressive-forming of the bean under the pressure by the hydraulic press or the mechanical press.

The compressed coffee bean block 10 may be made by the mixing of the roasted coffee bean with additives and the compressive-forming thereof.

Here, by using sugar powder and/or coffee cream powder as the additives, the compressed coffee bean block 10 may be made for sugar coffee or sugar cream coffee.

Furthermore, additives other than the sugar powder and the coffee cream powder may be added such that a consumer may select the additives according to his or her preference.

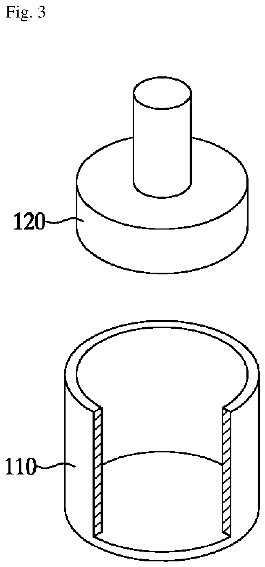

FIG. 3 is a partially cutaway perspective view illustrating a first embodiment of an apparatus for manufacturing the compressed coffee bean block according to the present disclosure.

The apparatus for manufacturing the compressed coffee bean block according to this embodiment includes a forming mold 110 having the shape of a bottomed tub, and a push rod 120 inserted into the forming mold 110 to compress the coffee bean B that is put into the forming mold 110.

Although each of the forming mold 110 and the push rod 120 is illustrated as having a circular cross-section, it may be shaped into a triangle, a rectangle, a hexagon, an octagon, an ellipse, a heart, a water drop, and the like, without being limited to the circular cross-section.

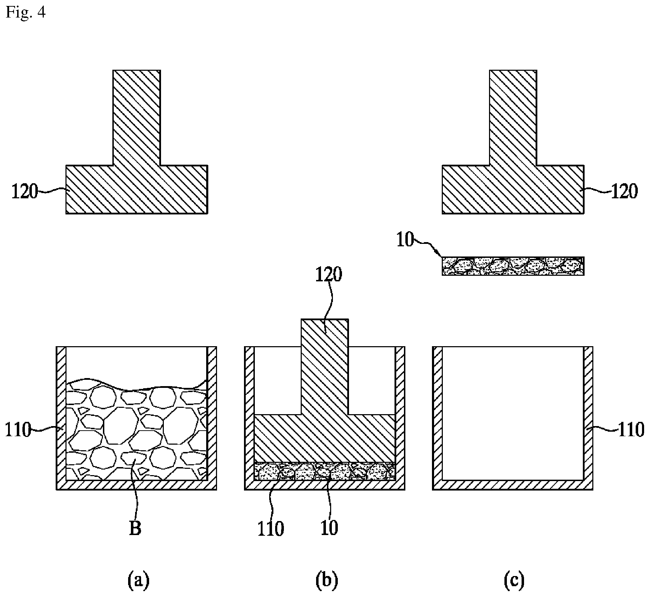

FIGS. 4A to 4C are longitudinal sectional views illustrating a first embodiment of a method for manufacturing the compressed coffee bean block by the apparatus for manufacturing the compressed coffee bean block of FIG. 3.

The method for manufacturing the compressed coffee bean block according to this embodiment includes a step of placing the forming mold 110 and putting the coffee bean B into the forming mold 110 as illustrated in FIG. 4A, a step of compressing the coffee bean B that has been put into the forming mold 110 by the push rod 120 as illustrated in FIG. 4B, and a step of separating the push rod 120 and withdrawing the compressed coffee bean block 10 that has undergone the compressive forming.

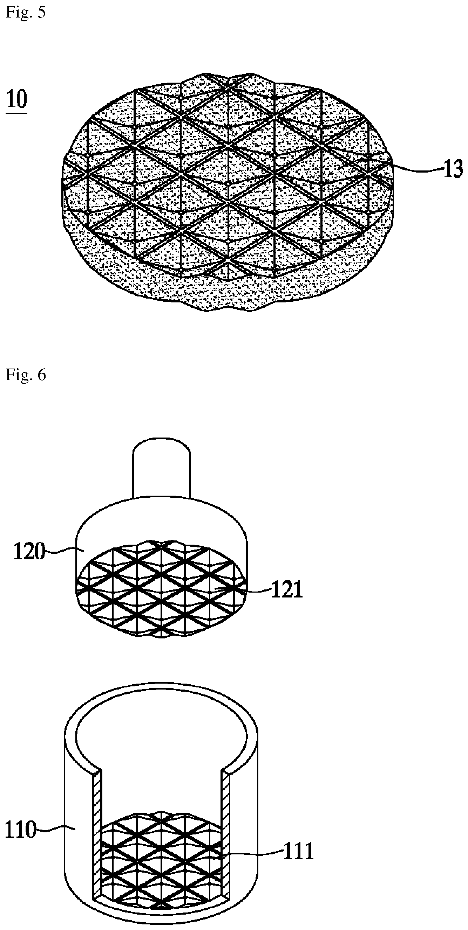

FIG. 5 is a perspective view illustrating a second embodiment of a compressed coffee bean block according to the present disclosure.

The compressed coffee bean block 10 according to this embodiment has uneven parts 13 formed on upper and lower surfaces thereof.

The uneven part 13 according to this embodiment evenly apply pressure to coffee grains in the process for forming the compressed coffee bean block 10 to allow each bean to be uniformly separated into fine-sized particles in the pressurizing process, thereby increasing the contact area of the particles with water in the process of extracting espresso, dripping or brewing the bean in water to prepare a coffee drink, and maintaining a uniform coffee taste without the impure taste.

FIG. 6 is a partially cutaway perspective view illustrating a second embodiment of an apparatus for manufacturing the compressed coffee bean block according to the present disclosure.

The apparatus for manufacturing the compressed coffee bean block according to this embodiment includes a forming mold 210 having the shape of a bottomed tub, and a push rod 220 inserted into the forming mold 210 to compress the coffee bean B that is put into the forming mold 210. An uneven part 212 having an angled protrusion 211 is formed on the bottom of the forming mold 210, while an uneven part 222 having an angled protrusion 221 to engage with the angled protrusion 211 is formed on the push rod 220.

Although each of the angled protrusions 211 and 221 is illustrated as having the shape of a quadrangular pyramid, it may have various shapes including a cone, a hexagonal pyramid, an octagonal pyramid, and the like.

The uneven parts 212 and 222 having the angled protrusions 211 and 221 apply uniform pressure in several directions, thus more smoothly performing the compressive-forming of the coffee bean B in conjunction with the forming mold 210 and the push rod 220.

That is, in the process of forming the compressed coffee bean block by the uneven parts 212 and 222, the coffee particles may be uniformly separated into fine particles.

FIGS. 7A to 7C are longitudinal sectional views illustrating a second embodiment of a method for manufacturing the compressed coffee bean block according to the present disclosure.

The method for manufacturing the compressed coffee bean block according to this embodiment includes a step of placing the forming mold 210 having the angled protrusion 211 formed on the bottom thereof and putting the coffee bean B into the forming mold 210 as illustrated in FIG. 7A, a step of compressing the coffee bean B that has been put into the forming mold 210 by the push rod 220 as illustrated in FIG. 7B, and a step of separating the push rod 220 and withdrawing the compressed coffee bean block 10 that has undergone the compressive forming as illustrated in FIG. 7C. The compressed coffee bean block 10 having an uneven part corresponding to the uneven part 13 having the angled protrusions 211 and 221 on the upper and lower surfaces is formed.

The compressed block formed in this way may be used to extract the coffee drink. Alternatively, the block composed of the fine coffee particle forming the compressed block may be separated into coffee particles and then the coffee particles may be used to extract espresso or prepare the coffee drink by dripping or brewing the particles in water.

FIGS. 8 and 9 illustrate a first preferred embodiment of a tea-bag according to the present disclosure.

The tea-bag TB according to this embodiment includes a primary tea-bag TB1 that includes the compressed coffee bean block 10 or coffee particles forming the compressed block, and a permeable wrapper 20 packing the compressed coffee bean block or the coffee particles.

A handle tag 21 is connected to a side of the permeable wrapper 20 via yarn 22, so that a secondary tea-bag TB may be safely and conveniently used without burning the hand when the tea-bag is soaked in hot water.

If the primary tea-bag TB1 is soaked in water, water primarily permeates the permeable wrapper 20, and then permeates gaps between the coffee particles or the compressed coffee bean block 10 packed in the wrapper, so that coffee is easily brewed.

FIGS. 10(a) and 10(b) illustrate a first preferred embodiment of a method for manufacturing the tea-bag according to the present disclosure.

The tea-bag manufacturing method according to this embodiment is to manufacture the primary tea-bag TB1 by separating the compressed coffee bean block 10 or a block of coffee particles and then packing the coffee particles with the permeable wrapper 20.

The permeable wrapper 20 may use non-woven fabric. By inserting the compressed coffee bean block 10 or the coffee particles into the permeable wrapper 20 and bonding an edge of the permeable wrapper 20 through thermal bonding or high-frequency bonding, the bag-shaped primary tea-bag TB1 may be manufactured.

FIGS. 11 and 12 illustrate a second preferred embodiment of a tea-bag according to the present disclosure.

The tea-bag TB according to this embodiment is composed of the primary tea-bag TB1, and the secondary tea-bag TB2 including a vacuum wrapper 30 that vacuum packs the primary tea-bag TB 1.

The tea-bag TB according to this embodiment has the vacuum wrapper 30 to protect the compressed coffee bean block 10 or the coffee particles and the permeable wrapper 20 constituting the primary tea-bag TB1 from outside air and moisture, thus preventing the unique flavor of the coffee bean B from being decreased.

FIGS. 13(a) to 13(c) illustrate a second preferred embodiment of a method for manufacturing the tea-bag of the compressed coffee bean block or the coffee particles according to the present disclosure.

The method for manufacturing the tea-bag of the compressed coffee bean block or the coffee particles according to this embodiment is to manufacture the secondary tea-bag TB2 by vacuum packing the primary tea-bag TB 1 with the vacuum wrapper 30.

The vacuum wrapper 30 may use a synthetic resin sheet, and the secondary tea-bag TB2 may be manufactured by inserting the primary tea-bag TB1 into the vacuum wrapper 30, discharging air from between the primary tea-bag TB1 and the vacuum wrapper 30, and seaming the edge of the vacuum wrapper 30 through thermal bonding.

FIG. 14 illustrates a state where the compressed coffee bean block or the coffee particles, the primary tea-bag, and the secondary tea-bag are packed with an outer wrapper.

The compressed coffee bean block 10 or the coffee particles, the primary tea-bag TB1, and the secondary tea-bag TB2 may be finally packaged by the outer wrapper 40 to be commercialized.

A product name, materials, instructions, a shelf life, and the like may be printed on the outer wrapper 40.

The outer wrapper 40 may be individual packaging of the compressed coffee bean block 10 or the coffee particles, the primary tea-bag TB1, and the secondary tea-bag TB2, or may be economical packaging of multiple compressed coffee bean blocks 10, primary tea-bags TB1, and secondary tea-bags TB2.

Furthermore, the compressed coffee bean block and the tea-bag according to the present disclosure may be used as the air freshener, in addition to the purpose of preparing the coffee.

Since the compressed coffee bean block according to the present disclosure is made by compressive forming of the coffee bean, the unique aroma of the coffee bean remains intact and service life is extended as the air freshener.

Furthermore, if a large capacity of coffee beans is used when the compressed coffee bean block of the present disclosure is formed by compression to be used for the air freshener, this block should be formed larger than the block which is formed by compression to be used for a disposable small capacity of coffee with compressive forming pressure, so as to extend the service life.

FIGS. 15 and 16 illustrate a preferred embodiment of a coffee drink using the compressed coffee bean block according to the present disclosure.

The coffee drink 50 using the compressed coffee bean block according to this embodiment contains coffee essence extracted from the compressed coffee bean block 10 or the coffee particles.

The coffee drink 50 may use the coffee essence extracted from the compressed coffee bean block 10 or the coffee particles, or may use the mixture of the additive such as sugar or coffee cream with the coffee essence.

FIG. 15 illustrates a state where the coffee drink 50 is put into a cup 60.

As illustrated in FIG. 16, the coffee drink 50 may be put into a container such as a general can 70 or bottle 80 to be manufactured as a canned drink.

Although the present invention was described with reference to specific embodiments shown in the drawings, it is apparent to those skilled in the art that the present invention may be changed and modified in various ways without departing from the scope of the present invention, which is described in the following claims. Thus, the invention should not be construed as limited to the embodiments set forth herein. Rather, all changes that fall within the bounds of the present invention, or the equivalence of the bounds are therefore intended to be embraced by the present invention.

Various kinds of coffee drinks such as espresso using a compressed coffee bean block or coffee particles finely separated in a compressing process of the present disclosure allow people to enjoy unique deep and rich flavor of a roasted coffee bean without carbonization and forcible destruction of fiber caused by a blade occurring in an existing grinding process, and the compressed coffee bean block or the coffee particles are made into a coffee bean tea-bag and are vacuum packed by a vacuum wrapper, thus allowing people to easily enjoy a coffee drink having inherent flavor of the roasted coffee bean for a lengthy period of time, and utilizing compressed coffee as an air freshener.

## Claims

1. A compressed coffee bean block formed by compressing roasted coffee beans.

2. The compressed coffee bean block of claim 1, wherein assuming that a volume of the roasted coffee bean is V0 and a volume of the compressed coffee bean block is VI, a ratio of V1 / V0 = 0.1 to 0.5.

3. Coffee particles that are finely separated in the compressing process of the compressed coffee bean block of claim 1 or 2.

4. The coffee tea-bag of any one of claims 1 to 3, which comprises a primary tea-bag, wherein the compressed coffee bean block or coffee particles are packed with a permeable wrapper to configure the primary tea-bag.

5. The coffee tea-bag of claim 4, further comprising a secondary tea-bag vacuum packing the primary tea-bag with a vacuum wrapper.

6. A coffee drink extracted from the compressed coffee bean block or the coffee particles according to any one of claims 1 to 3.

7. A coffee drink made by putting the primary tea bag according to claim 4 or 5 into water.

8. A method for manufacturing a compressed coffee bean block, the method comprising:
putting the roasted coffee bean into a forming mold;
forming by compression the coffee bean that has been put into the forming mold by a push rod; and
withdrawing the compressed coffee bean block from the forming mold.

9. The method of claim 8, wherein the pressure applied to the coffee beans is evenly applied by the protrusion(s) of a predetermined pattern formed on the mold and the pressure bar in the step of compressing the coffee beans.

10. An apparatus for manufacturing a compressed coffee bean block, the apparatus comprising:
a forming mold into which a roasted coffee bean is put; and
a push rod configured to pressurize and compress the coffee bean that has been put into the forming mold.

11. The apparatus of claim 10, wherein a protrusion of a predetermined pattern is disposed on the forming mold and the push rod.

## Amended claims

### Amended claims under Art. 19.1 PCT

1. A compressed coffee bean block for a coffee drink intended to reduce burnt taste and increase flavor in the coffee drink,
wherein a protrusion of a predetermined pattern is disposed on at least one surface of each of a compressive forming mold and a push rod such that cracks are evenly formed on a honeycomb-structured cell walls of coffee particles in a compressive forming process to make the compressed coffee bean block, and thereby a protrusion shape is imprinted in said block by the protrusion which gives pressure in plurality of directions when the coffee beans are pressurized

2. The compressed coffee bean block of claim 1, wherein, assuming that a volume of the roasted coffee bean is V0 and a volume of the compressed coffee bean block is VI, a ratio of V1 / V0 = 0.1 to 0.5.

3. Coffee particles constituting the compressed coffee bean block as described in claim 1 or 2.

4. A coffee tea-bag configured to include coffee particles constituting compressed coffee bean block or compressed block wherein roasted coffee bean is compressively formed for extracting coffee drink.

5. The coffee tea-bag of any one of claims 1 to 4, which comprises a primary tea-bag, wherein the compressed coffee bean block or coffee particles are packed with a permeable wrapper to configure the primary tea-bag.

6. The coffee tea-bag of claim 5, further comprising:
a secondary tea-bag vacuum packing the primary tea-bag with a vacuum wrapper.

7. A coffee drink extracted from the compressed coffee bean block or the coffee particles as described in any one of claims 1 to 6.

8. A method for manufacturing a compressed coffee bean block for a coffee drink intended to reduce burnt taste and increase flavor in the coffee drink, with a protrusion shape being imprinted on the block, the method comprising:
putting the roasted coffee bean into a forming mold on which a protrusion of a predetermined pattern is disposed;
forming by compression the coffee bean that has been put into the forming mold by a push rod having a protrusion of a predetermined pattern; and
withdrawing the compressed block from the forming mold.

9. The method of claim 8, wherein, assuming that a volume of the roasted coffee bean is V0 and a volume of the compressed coffee bean block is VI, a ratio of V1 / V0 = 0.15 to 0.5 according to a roasting level and an extraction method of the coffee bean.

10. The method of claim 8 or 9, wherein a protrusion of a predetermined pattern is disposed on any one of the forming mold and the push rod to imprint a protrusion shape.

11. An apparatus for manufacturing a compressed coffee bean block having a protrusion shape imprinted thereon, the apparatus comprising:
a forming mold into which a roasted coffee bean is put so as to manufacture the compressed coffee bean block of claim 1 or 2, with a protrusion of a predetermined pattern being disposed on the forming mold; and
a push rod configured to pressurize and compress the coffee bean that has been put into the forming mold, with a protrusion of a predetermined pattern being disposed on the push rod.

12. The apparatus of claim 9, wherein a protrusion of a predetermined pattern is disposed on any one of the forming mold and the push rod to imprint a protrusion shape.

Statement under Art. 19.1 PCT
With respect to International Application No. PCT/KR2018/00709, filed internationally on June 22, 2018, we hereby submit our opinion as follows according to the Examiner's notice of November 21, 2018 about the amendment and opinion submitted on November 14, 2018.

In the amendment filed on November 14, 2018, claims 1, and 4-11 are amended to be clear within the scope of the contents of specification and claims as originally filed.

First, claim 1 limits the coffee bean compression block to be pressed by a predetermined pattern of protrusions. This is supported by the claims set forth in claims 9 and 11 and the specification paragraphs 46, 112-120, and is specifically limited based thereon.

Second, claim 4 is amended in the form of an independent claim, and the compression-molded compression block is packaged in a wrapper for long-term distribution allowing each individual to enjoy a delicious coffee drink, which is supported by the paragraphs 34 and 49 of the specification. have.

Third, claims 5 and 6 incorporate the originally filed claims 4 and 5, which are amended to contain the same the technical idea.

Fourth, claim 7 is identical to the originally filed claim 6 in the technical idea.

Fifth, claim 8 incorporates the originally filed claims 8 and 9, containing the same technical idea.

Sixth, claim 9 limits the scope of the compression in the compression-molding step of claim 8, the content of which is supported by the paragraphs 91-92 of the specification.

Seventh, claim 10 and 12 are to allow a predetermined pattern of protrusions to be selectively disposed only in either the forming mold or the push rod, and are amended within the technical scope in which a person of ordinary skill in the art can easily change based on the paragraph 46 of the specification.

Eighth, claim 11 is amended by incorporating the originally filed claims 10 and claim 11, containing the same technical idea.
